# EUROPEAN PATENT SPECIFICATION

(11) **EP 3 578 609 B1**
(45) Date of publication and mention of the grant of the patent: **23.03.2022**
(21) Application number: 19174653.6
(22) Date of filing: 15.05.2019
(51) Int. Cl.: C09B 61/00, D06P 1/34

(54) **METHOD TO PRODUCE NATURAL DYE FROM HAZELNUT LEAF**
VERFAHREN ZUR HERSTELLUNG VON NATÜRLICHEM FARBSTOFF AUS HASELNUSSBLATT
PROCÉDÉ POUR PRODUIRE D`UN COLORANT NATURELLE À PARTIR DE FEUILLE DE NOISETIER

(30) Priority: 06.06.2018 TR 201808041
(43) Date of publication of application: 11.12.2019
(73) Proprietor: Akar Tekstil Gida Ve Turizm Sanayi Ticaret Anonim Sirketi, Cigli, Izmir (TR)
(72) Inventor: BEYAZ, T. Kemal, IZMIR (TR); BEYAZ, T. Rasit, IZMIR (TR)
(74) Representative: Yamankaradeniz, Kemal

(56) References cited:
- EP-A1- 2 527 407
- MUSTAFA TUTAK AND HÜSEYIN BENLI: "Dyeing properties of textiles by Turkish hazelnut (Corylus colurna): leaves, coat, shell and dice", COLORATION TECHNOLOGY, WILEY, vol. 128, no. 6, 1 December 2012 (2012-12-01), pages 454-458, XP001587679, ISSN: 1472-3581, DOI: 10.1111/J.1478-4408.2012.00399.X [retrieved on 2012-08-25]

## Description

### The Related Art

This invention relates to method to produce a dye from hazelnut leaves, which having natural structure and not containing chemicals and used in areas such as textile, cosmetics etc.

### Background of the Invention

Humans have dyed any kinds of properties, the buildings they live in, vehicles they drive, clothes they wear and their own bodies for thousands of years. Dyed properties are discovered in Egyptian pyramids, Inca tombs in Peru. Cavemen lived 25.000 years ago used dye in the paints they made on cave walls. A mummy dating to 5,000 years ago in Egypt is wrapped with dyed fabric strips, Dye entered humans' life in ancient times and many various dyes and dyeing techniques have been developed with technology developing in time.

Most basically dyes are natural dyes, metal dyes and synthetic dyes, namely categorized into three groups. The dyes used by humans in very ancient times were obtained from animals and plants. Dye was also made from roots and fruit of some plants. Main plants which used for obtaining dye are henna, saffron, woad, blue litmus plants and cochineal insect. Metal dyes are the ones made from some mines by means of various methods by humans since ancient times. Various rocks were also used for this purpose. They were hammered and brought into powder form and then used in dye process. Waters containing sulphur etc. were also used as dyes. Main metal dyes used today are lead, zinc, titan, barium, antimon, cadmium, chrome and cobalt compounds. Dyes known as synthetic dyes have replaced all metal and natural dyes today. They not only cost cheap but also offer richer range of colours. Main agent used in production of synthetic dye is coal. Raw agent of dye is obtained by heating mine coal in close furnace. Thus, coal tar is separated. Dye agents are separated by heating tar at various temperatures. The agents are in form of colourless liquid or crystals. High amount of toxic agents are released during production of synthetic pigments and the toxic wastes harm nature and humans. In addition, thinners are also used to provide thickening allowing spreading synthetic dyes. Thinner functions to dissolve. After application of dye thinner evaporates and is released into atmosphere and leaves dry dye applied onto surface. Water or organic chemicals are used as thinner in dyes. The thinner released into atmosphere may have negative impacts on humans' health.

In the related art, it is known that there are natural dyes in food and clothing sector not causing damage to human health. Dyes of various colours and contents are produced by use of various plants.

Chinese patent application numbered CN103657592 discloses a dye absorbent obtained from hazelnut shells. Said patent consists of process steps of mixing ground hazelnut parts with zinc chloride solvent and after wetting hazelnut parts in zinc chloride solvent, subjecting hazelnut parts to microwave operation.

Turkish patent application numbered TR2016/08669 discloses water extract characterized in comprising dyeing agent obtained from colourful leaves of bougainvillea glabra (bridal veil).

Turkish publication that is published at Coloration Technology, Wiley on 25 August 2012 is about hazelnut could be used as a natural dye for dyeing textile fabrics. The dyeing properties of the leaves, coat, shell and dice of the hazelnut were studied on wool, cotton and viscose fabric by using three different mordants: copper sulphate, iron sulphate and aluminium sulphate.

As also seen in the above mentioned patents, patent applications about production of natural dye by use of various plants are seen in the related art. However, present patents mostly use plants difficult to be found as raw material or relate to dyes containing chemicals.

### Technical problems the invention intends to solve

The invention aims to produce a natural dye with low raw material cost, not containing chemicals and not damaging nature because of waste water by means of a method to obtain natural dye from hazelnut leaves.

One of advantages of producing natural dye from hazelnut shells is that waste water occurring during production of dye by use of hazelnut leaves and containing toxic chemicals does not occur and the damages caused by the waste water is prevented.

One of advantages of method to produce dye from hazelnut leaves disclosed hereunder is that dye does not release any harmful gases into environment and atmosphere when dye gets dried because there is no chemical in the liquid evaporating during drying thanks to use of water as thinner to provide thickening to make it spreadable.

Another advantage of obtaining natural dye from hazelnut leaves disclosed hereunder is that production is made without no damage to nature because of use of hazelnut leaves available as waste in nature.

Figures are used to make the method subject matter of invention understood better.

### Description of Figures

Figure-1 is a picture schematically showing processes applied and system components used to obtain dye from hazelnut leaves by use of method to obtain natural dye from hazelnut leaves disclosed hereunder.
Figure -2 shows flow chart of stages of method to obtain natural dye from hazelnut leaves disclosed hereunder.

### Parts and Reference Numbers of Parts for Better Understanding of Description

- 1: - Leaf raw material
- 2: - Drying floor
- 3: - Press machine
- 4: - Compressed leaf
- 5: - Boiler
- 6: - Holding chamber
- 7: - Filtering apparatus
- 8: - Dye barrel

### Production Stages:

- 100:: Stage of picking/ collecting leaves
- 110:: Drying stage
- 120:: Pressing stage
- 130:: Boiling stage
- 140:: Holding stage
- 150:: Filtering stage
- 160:: Holding in dye barrel stage

### Detailed Description of the Invention

This invention discloses production of a natural dye by use of hazelnut leaves not damaging public health and available in nature as waste in terms of raw material in order to give colour to fabrics in textile sector in particular. Said method provides natural dye production without no chemical wastes.

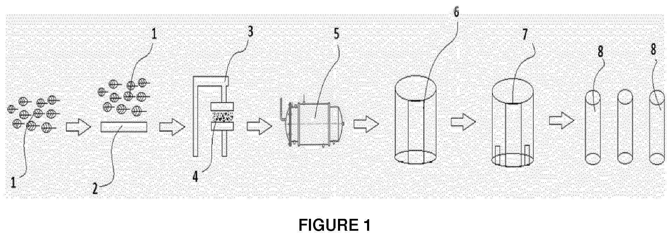

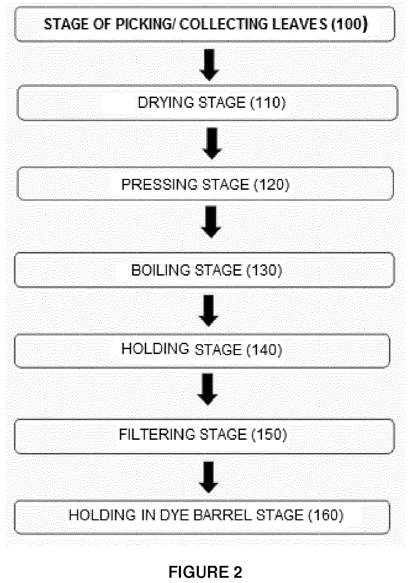

In the production method disclosed hereunder, leaves collected during hazelnut harvesting periods are used as raw material. Figure 1 shows schematic and holistic view of means symbolising production of natural dye. Figure 2 is flow chart showing basic stages of method disclosed hereunder.

According to method to obtain natural dye from hazelnut leaves as disclosed hereunder, dye production process is basically as follows:
- Stage of picking/collecting leaves (100)
- Drying stage (110)
- Pressing stage (120)
- Boiling stage (130)
- Holding stage (140)
- Filtering stage (150)
- Holding in dye barrel stage (160)

As seen in said flow chart, leaf raw material (1) is collected preferably in spring and summer months. After this stage, the collected leaves are kept on drying floor (2) at room temperature (about 20 - 25°C) for 2 days and d ried. Drying process can also be made by machines if preferred. The dried leaves are subjected to pressing operation as the next process. The leaves are crushed in pressing machines (3) at this stage. Pressed leaves (4) are subjected to boiling process in water in next stage. This process is made in boilers (5) for a period ranging from 30 minutes to 90 minutes and at about 80 °C to 120°C of temperature. The boiled leaves (4 ) in powder form are hold for resting in holding chamber (6) at room temperature (18°C - 30°C) for minimum 1 day. Said boiled and pressed leaves (4) can also be kept in boilers (5). In the next stage, boiled pressed leaves (4) is filtered by filtering apparatus (7) for separation. In this stage the dyeing agent available in leaf raw material (1) and transferred into water by boiling operation is separated. Water separated from solid agents therein is hold for a period from 3 days to 10 days in dye barrels (8). After this holding stage, natural dye is obtained from hazelnut leaves and said dye is made ready for use. In general, said processes are classified into technical stages and described as listed below.

When taking method for production of natural dye from hazelnut leaves in terms of flow, basically it comprises process steps of;
- Stage of picking/collecting leaves (100)
- Drying stage (110)
- Pressing stage (120)
- Boiling stage (130)
- Holding stage (140)
- Filtering stage (150)
- Holding in dye barrel stage (160).

The steps applied during each stage are as described below.

**Stage of picking/collecting leaves (100):** For production of natural dye from hazelnut leaves, leaf raw materials (1) are collected. In general April and September are preferred for hazelnut leaf collection as these months are more efficient for leaves. Amount of leaves to be collected is determined based on amount of dye to be produced.

**Drying stage (110):** The leaf raw materials (1) collected at this stage the collected leaves are kept on drying floor (2) at room temperature (18 - 30°C) for 2 days and dried. Drying can also be made with machines by hot or warm air blowing based on preferences.

**Pressing stage (120):** The leaf raw materials (1) in dried form are crushed at press machines (3) at this stage.

**Boiling stage (130):** Pressed leaves (4) are subjected to boiling at this stage. The amount of water needed for 1 kilogram of pressed leaf (4) during boiling is 10 to 20 litres. This operation is made at boilers (5) for a period of 30 minutes to 90 minutes. The temperature required for boiling is between 80°C - 120°C. (If desired, direct boiling can be performed without performing pressing stage (120).)

**Holding stage (140):** The pressed leaves (4) are hold at holding chamber (6) or boilers (5) for conditioning at this stage. Holding period is minimum 1 day. The proper temperature for holding is between 20°C - 25°C.

**Filtering stage (150):** In this stage, boiled pressed leaves (4) is filtered by filtering apparatus (7) for separation. In this stage the dyeing agent available in leaf raw material (1) and transferred into water by boiling operation is separated.

**Holding in dye barrel stage (160):** In this stage, water separated from pressed leaves (4) is hold for a period from 3 days to -10 days in dye barrels (8). After this holding stage, natural dye is obtained from hazelnut leaves and said dye is made ready for use.

### Way of industrial applicability of invention

With method for obtaining natural dye from hazelnut leaves disclosed under the invention, dye not containing chemicals will be used in textile and cosmetics fields in particular. The factors having negative impacts on public health and nature will be eliminated as the chemicals released during production and use of dye will not be released.

## Claims

1. A method for production of natural dye from hazelnut leaves **characterized in** comprising following stages;
- Stage of picking/collecting leaves (100)
- Drying stage (110)
- Pressing stage (120)
- Boiling stage (130)
- Holding stage (140)
- Filtering stage (150)
- Holding in dye barrel stage (160)

2. The method for production of natural dye from hazelnut leaves according to claim 1, **characterized in** comprising keeping and drying leaf raw materials (1) on drying floor (2) at a temperature between 18-30°C for at least 2 days during drying stage (110).

3. The method for production of natural dye from hazelnut leaves according to claim 2, **characterized in** comprising drying of leaf raw materials (1) preferably by use of a machine during drying stage (110).

4. The method for production of natural dye from hazelnut leaves according to claim 2, **characterized in** comprising crushing the leaf raw materials (1) in dried form at press machines (3), during pressing stage (110).

5. The method for production of natural dye from hazelnut leaves according to claim 4, **characterized in** comprising process step of boiling 10 - 20 litres of water per 1 kilogram of pressed leaves (4) for 30 minutes to 90 minutes at a temperature between 80°C - 120°C in boiling boilers (5) during boiling stage (130).

6. The method for production of natural dye from hazelnut leaves according to claim 1 or claim 5, **characterized in** comprising process of boiling leaf raw materials (1) not undergoing pressing stage in boiling stage.

7. The method for production of natural dye from hazelnut leaves according to claim 5, **characterized in** comprising process of holding boiled water and pressed leaves (4) for minimum 1 day at temperature between 20°C-25°C in holding chamber (6) or boilers (5) during holding stage (140).

8. The method for production of natural dye from hazelnut leaves according to claim 7, **characterized in** comprising process of filtering the pressed leaves (4) boiled and hold by filtering apparatus (7) during filtering stage (150).

9. The method for production of natural dye from hazelnut leaves according to claim 8, **characterized in** comprising process of holding the water separated from pressed leaves (4) in dye barrels (8) for 3 days to 10 days during holding in dye barrel stage (160).

## Patentansprüche

1. Verfahren zur Herstellung eines natürlichen Farbstoffs aus Haselnussblättern, **dadurch gekennzeichnet, dass** es die folgenden Stufen umfasst:
- Stufe des Pflückens/Einsammelns von Blättern (100)
- Trocknungsstufe (110)
- Pressstufe (120)
- Kochstufe (130)
- Haltestufe (140)
- Filterstufe (150)
- Stufe (160) des Haltens im Färbefass.

2. Verfahren zur Herstellung eines natürlichen Farbstoffs aus Haselnussblättern nach Anspruch 1, **dadurch gekennzeichnet, dass** es das Aufbewahren und Trocknen von Blattrohstoffen (1) auf einem Trockenboden (2) bei einer Temperatur zwischen 18-30 °C für mindestens 2 Tage während der Trocknungsstufe (110) umfasst.

3. Verfahren zur Herstellung eines natürlichen Farbstoffs aus Haselnussblättern nach Anspruch 2, **dadurch gekennzeichnet, dass** es das Trocknen von Blattrohstoffen (1) vorzugsweise unter Verwendung einer Maschine während der Trocknungsstufe (110) umfasst.

4. Verfahren zur Herstellung eines natürlichen Farbstoffs aus Haselnussblättern nach Anspruch 2, **dadurch gekennzeichnet, dass** es das Zerkleinern der Blattrohstoffe (1) in getrockneter Form an Pressmaschinen (3) während der Pressstufe (110) umfasst.

5. Verfahren zur Herstellung eines natürlichen Farbstoffs aus Haselnussblättern nach Anspruch 4, **dadurch gekennzeichnet, dass** es den Prozessschritt des Kochens von 10-20 Liter Wasser pro 1 Kilogramm gepresster Blätter (4) für 30 Minuten bis 90 Minuten bei einer Temperatur zwischen 80°C - 120°C in Siedekesseln (5) während der Kochstufe (130) umfasst.

6. Verfahren zur Herstellung eines natürlichen Farbstoffs aus Haselnussblättern nach Anspruch 1 oder Anspruch 5, **dadurch gekennzeichnet, dass** es einen Prozess zum Kochen von Blattrohstoffen (1) umfasst, die in der Kochstufe keiner Pressstufe unterzogen werden.

7. Verfahren zur Herstellung eines natürlichen Farbstoffs aus Haselnussblättern nach Anspruch 5, **dadurch gekennzeichnet, dass** es einen Prozess zum Halten von gekochtem Wasser und gepressten Blättern (4) für mindestens 1 Tag bei einer Temperatur zwischen 20 °C-25 °C in der Haltekammer (6) oder in den Kesseln (5) während der Haltestufe (140) umfasst.

8. Verfahren zur Herstellung eines natürlichen Farbstoffs aus Haselnussblättern nach Anspruch 7, **dadurch gekennzeichnet, dass** es einen Prozess zum Filtern der gepressten Blätter (4) umfasst, die gekocht und während der Filterstufe (150) von der Filtereinrichtung (7) gehalten werden.

9. Verfahren zur Herstellung eines natürlichen Farbstoffs aus Haselnussblättern nach Anspruch 8, **dadurch gekennzeichnet, dass** es einen Prozess zum Halten des von den gepressten Blättern (4) abgetrennten Wassers während der Stufe (160) des Haltens im Färbefass für 3 Tage bis 10 Tage in Farbfässern (8) umfasst.

## Revendications

1. Procédé permettant la production de colorant naturel à partir de feuilles de noisetier **caractérisé en ce qu'**il comprend les étapes suivantes ;
- Étape de cueillette/ramassage des feuilles (100)
- Étape de séchage (110)
- Étape de pressage (120)
- Étape d'ébullition (130)
- Étape de retenue (140)
- Etage de filtrage (150)
- Étape de retenue en fût de colorant (160).

2. Procédé permettant la production de colorant naturel à partir de feuilles de noisetier selon la revendication 1, **caractérisé en ce qu'**il comprend la conservation et le séchage des matières premières foliaires (1) sur le sol de séchage (2) à une température comprise entre 18 et 30°C pendant au moins 2 jours durant l'étape de séchage (110).

3. Procédé permettant la production de colorant naturel à partir de feuilles de noisetier selon la revendication 2, **caractérisé en ce qu'**il comprend le séchage des matières premières foliaires (1) de préférence à l'aide d'une machine durant l'étape de séchage (110).

4. Procédé permettant la production de colorant naturel à partir de feuilles de noisetier selon la revendication 2, **caractérisé en ce qu'** il comprend le broyage des matières premières foliaires (1) sous forme séchée au niveau des presses (3), durant l'étape de pressage (110).

5. Procédé permettant la production de colorant naturel à partir de feuilles de noisetier selon la revendication 4, **caractérisé en ce qu'**il comprend l'étape de processus d'ébullition de 10 à 20 litres d'eau pour 1 kilogramme de feuilles pressées (4) pendant 30 minutes à 90 minutes à une température comprise entre 80°C et 120°C dans des bouilleurs à ébullition (5) durant l'étape d'ébullition (130).

6. Procédé permettant la production de colorant naturel à partir de feuilles de noisetier selon la revendication 1 ou la revendication 5, **caractérisé en ce qu'**il comprend le processus d'ébullition de matières premières foliaires (1) ne subissant pas d'étape de pressage dans l'étape d'ébullition.

7. Procédé permettant la production de colorant naturel à partir de feuilles de noisetier selon la revendication 5, **caractérisé en ce qu'**il comprend le processus de retenue d'eau bouillie et de feuilles pressées (4) pendant, au minimum, 1 jour à une température comprise entre 20°C et 25°C dans la chambre de retenue (6) ou des bouilleurs (5) durant l'étape de retenue (140).

8. Procédé permettant la production de colorant naturel à partir de feuilles de noisetier selon la revendication 7, **caractérisé en ce qu'** il comprend le processus de filtrage des feuilles pressées (4) bouillies et retenues par un appareil de filtrage (7) durant l'étape de filtrage (150).

9. Procédé permettant la production de colorant naturel à partir de feuilles de noisetier selon la revendication 8, **caractérisé en ce qu'**il comprend le processus de retenue de l'eau séparée des feuilles pressées (4) dans des fûts de colorant (8) pendant 3 jours à 10 jours durant la retenue dans l'étape de retenue en fût de colorant (160).
